# EUROPÄISCHE PATENTSCHRIFT

(11) **EP 0 997 346 B1**
(45) Veröffentlichungstag und Bekanntmachung des Hinweises auf die Patenterteilung: **13.11.2002**
(21) Anmeldenummer: 99118489.6
(22) Anmeldetag: 18.09.1999
(51) Int. Cl.: B60R 1/12

(54) **Aussenrückspiegel für Fahrzeuge, insbesondere Kraftfahrzeuge**
Exterior rear view mirror for vehicles , especially motor vehicles
Rétroviseur extérieur pour véhicules, en particulier véhicules à moteur

(30) Priorität: 29.10.1998 DE 29819279 U
(43) Veröffentlichungstag der Anmeldung: 03.05.2000
(73) Patentinhaber: Reitter & Schefenacker GmbH & Co. KG, 73730 Esslingen (DE)
(72) Erfinder: Mertens, Jens, 70374 Stuttgart (DE); Zwick, Hubert, 70173 Stuttgart (DE)
(74) Vertreter: Jackisch-Kohl, Anna-Katharina

(56) Entgegenhaltungen:
- EP-A- 0 230 834
- EP-A- 0 820 900
- GB-A- 2 161 440
- GB-A- 2 338 693
- US-A- 5 436 741
- PATENT ABSTRACTS OF JAPAN vol. 1997, no. 08, 29. August 1997 (1997-08-29) & JP 09 095177 A (YAMASA NOUSAN KK), 8. April 1997 (1997-04-08)

## Beschreibung

Die Erfindung betrifft einen Außenrückblickspiegel für Fahrzeuge, vorzugsweise für Kraftfahrzeuge, nach dem Oberbegriff des Anspruches 1.

Es sind Außenrückblickspiegel bekannt, bei denen der Spiegelkopf gegenüber dem Spiegelfuß von Hand motorisch in Fahrtrichtung des Fahrzeuges nach hinten abgeklappt werden kann. Zudem läßt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Solche Außenrückblickspiegel weisen eine Blinkleuchte auf, die an der in Fahrtrichtung vorderen Seite des Spiegelgehäuses vorgesehen ist. Für neben oder hinter dem Außenrückblickspiegel befindliche Verkehrsteilnehmer ist die Blinkleuchte jedoch nicht oder nur ungenügend erkennbar.

Beim gattungsgemäßen Außenrückblickspiegel (GB-A-2 161 440) strahlt die Blinkleuchte Licht in einem Winkelbereich von mindestens 180° in Fahrtrichtung nach vorne und hinten ab. Damit die ausgesandten Strahlen nicht zum Fahrer des Fahrzeuges gelangen, weist der Außenrückblickspiegel einen zur Blinkleuchte winkligen Rand auf. Dies erfordert eine aufwendige und damit teure Gestaltung des Spiegelkopfes dieses Außenrückbtickspiegels.

Es ist auch eine Signalleuchte bekannt (EP-A-0 230 834), bei der eine Lichtquelle in einem Brennpunkt eines Ellipsoidreflektors angeordnet ist. Die von der Lichtquelle reflektierten Strahlen treffen in einem zweiten Brennpunkt des Reflektors zusammen. Die in diesem Brennpunkt einander schneidenden Strahlen werden von einem weiteren, als Spiegel ausgebildeten Reflektor zu einem dritten Reflektor reflektiert, der erst die Strahlen zur Lichtscheibe lenkt.

Der Erfindung liegt die Aufgabe zugrunde, einen Außenrückblickspiegel der gattungsbildenden Art so auszubilden, daß die von der Blinkleuchte ausgesandten Strahlen von den Verkehrsteilnehmern einwandfrei erkannt werden können, ohne daß eine aufwendige Ausbildung des Spiegelkopfes erforderlich ist.

Diese Aufgabe wird bei einem Außenrückblickspiegel der gattungsbildenden Art erfindungsgemäß mit den kennzeichnenden Merkmalen des Anspruches 1 gelöst.

Beim erfindungsgemäßen Außenrückblickspiegel liegt die Blinkleuchte in dem einen Brennpunkt des Reflektors. Die von ihr ausgesandten Strahlen schneiden einander im zweiten Brennpunkt des Reflektors. Da sich der zweite Brennpunkt außerhalb des Umrisses des Spiegelgehäuses befindet, werden von der Blinkleuchte die gesetzlichen Forderungen in bezug auf die Lichtstrahlen bzw. den Lichtwert und den Abstrahlwinkel erfüllt. Das Spiegelgehäuse weist zumindest nahezu die gleiche Größe auf wie Spiegelgehäuse ohne zusätzliche Blinkleuchte. Die Blinkleuchte des erfindungsgemäßen Außenrückblickspiegels strahlt das Licht über einen großen Winkelbereich schräg nach hinten ab, so daß die neben oder hinter dem Außenrückblickspiegel befindlichen Verkehrsteilnehmer zuverlässig und deutlich die Absicht des Fahrers, nach rechts oder links abzubiegen, erkennen können. Dadurch wird eine hohe Verkehrssicherheit gewährleistet.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher beschrieben. Es zeigt
- Fig. 1: in Draufsicht und teilweise im Schnitt einen erfindungsgemäßen Außenrückblickspiegel,
- Fig. 2: eine Ansicht in Richtung des Pfeiles II in Fig. 1.

Der Außenrückblickspiegel hat einen Spiegelfuß 1, mit dem er in bekannter Weise vorzugsweise an einem Kraftfahrzeug befestigt wird. Der Außenrückblickspiegel weist ferner einen Spiegelkopf 2 auf, der wiederum in bekannter Weise um eine Achse A abklappbar am Spiegelfuß 1 gelagert ist.

Der Spiegelkopf 2 hat ein Spiegelgehäuse 3, in dem ein über ein (nicht dargestelltes) Gelenk verstellbar gelagerter Spiegelglasträger 4 untergebracht ist. Er trägt ein Spiegelglas 4'. Die Verstellung des Spiegelglasträgers 4 um einen Drehpunkt D kann vom Fahrzeuginnenraum manuell oder elektromotorisch erfolgen.

Das Spiegelgehäuse 3 hat auf seiner in Fahrtrichtung F nach vorne weisenden Seite 5 ein Lichtfenster 6, das sich quer zur Fahrtrichtung F vom äußeren Ende des Spiegelkopfes 2 aus in Richtung auf den Spiegelfuß 1 erstreckt. Das Lichtfenster 6 liegt mit seinem vorderen Teil vorteilhaft innerhalb des Umrisses des Spiegelgehäuses 3. Das Lichtfenster 6 deckt einen Einbauraum 8 ab, in dem mindestens eine (nicht dargestellte) Blinkleuchte angeordnet ist. Sie kann durch eine oder mehrere LEDs oder Glühlampen, Neonlampen oder durch Lichtleitermaterial gebildet sein. Der Einbauraum 8 ist entgegen Fahrtrichtung F durch eine Zwischenwand 9 begrenzt, die im Spiegelgehäuse 3 vorgesehen ist. Das Lichtfenster 6 besteht aus lichtdurchlässigem Material, wie Glas, Kunststoff oder dergleichen. Vorzugsweise sind an der Rückseite des Lichtfensters 6 (nicht dargestellte) an sich bekannte Linsen- bzw. Prismenelemente vorgesehen, die das von der Blinkleuchte in Fahrtrichtung F nach vorn ausgesandte Licht optimal brechen.

Das Lichtfenster 6 deckt mit seinem vom Spiegelfuß 1 am weitesten entfernten Endabschnitt 10 eine weitere Blinkleuchte 11 ab, deren Licht in Fahrtrichtung F im wesentlichen nach hinten, z. T. aber auch unter einem Winkel α bis zu 60°, bezogen auf die Fahrzeuglängsachse, seitlich abgestrahlt wird. Die Blinkleuchte 11 liegt in einem im Spiegelgehäuse 3 vorgesehenen Einbauraum 12, der durch einen Teil der Zwischenwand 9 und des Lichtfensters 6 sowie durch einen Reflektor 13 begrenzt ist. Er ist als Ellipsoid-Reflektor ausgebildet, dessen beide Brennpunkte 14 und 15 auf einer Geraden G liegen, die unter einem spitzen Winkel, im Ausführungsbeispiel unter etwa 40°, zur Fahrzeuglängsachse liegt.

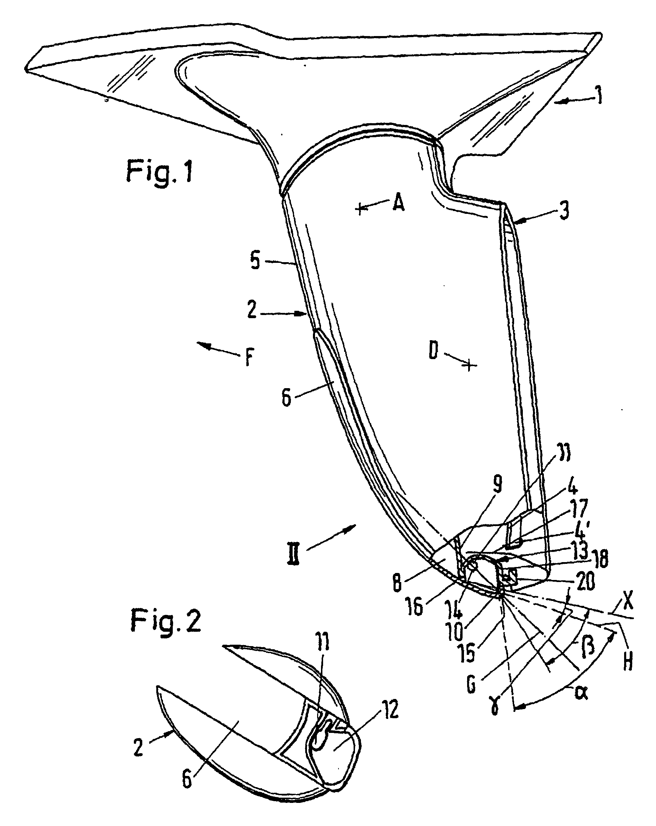

Der Reflektor 13 ist vorzugsweise einstückig mit der Zwischenwand 9 ausgebildet, die sich auf der vom Spiegelfuß 1 abgewandten Seite bis nahe an das Lichtfenster 6 erstreckt. An dieses Ende 16 schließt der Reflektor 13 mit einem im Querschnitt teilkreisförmig gekrümmten Abschnitt 17 an, der über eine etwa senkrecht zur Anschlußebene des Spiegelfußes 1 an das Fahrzeug verlaufende Seitenwand 18 an den Lichtfensterendabschnitt 10 anschließt. Wie Fig. 1 zeigt, liegt der Übergang von der Seitenwand 18 in den Endabschnitt 10 des Lichtfensters 6 am weitesten vom Spiegelfuß 1 entfernt. Dieser Übergangsbereich steht über dem in Fahrtrichtung F hinteren benachbarten Teil 20 des Spiegelgehäuses 3 vor (Fig. 1).

Im ersten Brennpunkt 14 sitzt die Blinkleuchte 11, die vorzugsweise als Glühlampe ausgebildet ist. Anstelle der Glühlampe kann aber auch eine LED, ein Lichtleitermaterial oder eine Neonleuchte verwendet werden, wobei auch mehrere solcher Leuchtmittel vorgesehen sein können.

Der Reflektor 13 ist konstruktiv so ausgebildet, daß die von der Blinkleuchte 11 ausgesandten und an ihm reflektierten Strahlen im zweiten Brennpunkt 15 einander schneiden. Er liegt im Bereich einer Spitze des Lichtfensters 6, die durch den Übergang des Endabschnittes 10 des Lichtfensters 6 in die Seitenwand 18 gebildet wird. Der Brennpunkt 14 liegt, in Fahrtrichtung F gesehen, seitlich neben dem Gehäuseteil 20. Die durch den Brennpunkt 15 gehende, parallel zur Fahrzeuglängsachse verlaufende Gerade X verläuft ebenfalls mit Abstand vom Gehäuseteil 20 auf der vom Spiegelfuß 1 abgewandten Seite. Die vom Reflektor 13 reflektierten Strahlen treten unter einem Winkel α in Fahrtrichtung F nach hinten aus dem Endabschnitt 10 des Lichtfensters 6 aus. Dieser Strahlungswinkel α beträgt mindestens 60°, gemessen von einer durch den Brennpunkt 15 gehenden Geraden H, die unter einem Winkel γ von 5° zur Geraden X liegt. Der Strahlungswinkel α ist der gesetzlich vorgeschriebene Wert. Das von der Blinkleuchte 11 ausgesandte Licht ist somit deutlich sichtbar, so daß die Verkehrssicherheit gewährleistet ist.

Da sich der Brennpunkt 15 in der beschriebenen Weise außerhalb des Umrisses des Spiegelgehäuses 3 befindet und die Seitenwand 18 entsprechend weit nach außen über den Spiegelgehäuseumriß vorgezogen ist, ist unter einem Winkel β von 45° zur Geraden X eine Lichtaustrittsfläche vorgesehen, deren Größe mindestens 10 cm² beträgt.

Infolge der beschriebenen Ausbildung werden von der Blinkleuchte 11 die gesetzlichen Forderungen in bezug auf die Lichtstärke bzw. den Lichtwert und den Abstrahlwinkel erfüllt. Das Spiegelgehäuse 3 weist zumindest nahezu die gleiche Größe auf wie die Spiegelgehäuse ohne eine solche zusätzliche, in Fahrtrichtung F nach hinten abstrahlende Blinkleuchte. Spezielle Lichtleitsysteme zur Erfüllung der gesetzlichen Auflagen sind nicht erforderlich. Die Blinkleuchte 11 gewährleistet eine hohe Verkehrssicherheit, da insbesondere neben und hinter dem Fahrzeug befindliche Verkehrsteilnehmer, wie Fahrradfahrer, Motorradfahrer oder Fußgänger - auch wenn sie sich seitlich oder etwas hinter dem Fahrzeug befinden - die Absicht des Fahrers deutlich und rechtzeitig erkennen, mit dem Fahrzeug abzubiegen.

Vorteilhaft haben die Fahrzeuge sowohl einen rechten als auch einen linken Außenrückblickspiegel, wobei vorteilhaft in beiden Außenrückblickspiegeln die beschriebene Zusatzblinkleuchte vorgesehen ist.

## Patentansprüche

1. Außenrückblickspiegel für Fahrzeuge, insbesondere Kraftfahrzeuge, mit einem Spiegelfuß (1) und einem Spiegelkopf (2), der einen Spiegelglasträger (4) und ein Spiegelgehäuse (3) aufweist und in dem mindestens eine Blinkleuchte (11) untergebracht ist, die hinter einem Lichtfenster (6) liegt und so im Spiegelkopf (2) angeordnet ist, daß sie Licht entgegen der Fahrtrichtung (F) des Fahrzeuges nach hinten unter einem dem Fahrzeug abgewandten Winkel (α) von wenigstens 55° abstrahlt, bezogen auf eine parallel zur Fahrzeugachse liegende, außerhalb des Umrisses des Spiegelgehäuses (3) und auf der vom Spiegelfuß abgewandten Seite vorgesehene Gerade (X),
**dadurch gekennzeichnet, daß** die Blinkleuchte (11) in einem ersten Brennpunkt (14) eines Ellipsoidreflektors (13) sitzt, in dessen zweiten Brennpunkt (15) die vom Reflektor (13) reflektierten Lichtstrahlen einander schneiden, und daß der zweite Brennpunkt (15) außerhalb des Umrisses des Spiegelgehäuses (3) liegt.

2. Außenrückblickspiegel nach Anspruch 1,
**dadurch gekennzeichnet, daß** der Reflektor (13) einstückig mit einer Zwischenwand (9) ausgebildet ist, die innerhalb eines Gehäuses (3) des Spiegelkopfes (2) vorgesehen ist.

3. Außenrückblickspiegel nach Anspruch 1 oder 2,
**dadurch gekennzeichnet, daß** der Reflektor (13) und die Zwischenwand (9) voneinander getrennte Bauteile sind.

4. Außenrückblickspiegel nach Anspruch 2 oder 3,
**dadurch gekennzeichnet, daß** die Zwischenwand (9) einen Einbauraum (8) für wenigstens eine weitere Blinkleuchte begrenzt, die Licht in Fahrtrichtung (F) des Fahrzeuges nach vorn abstrahlt.

5. Außenrückblickspiegel nach einem der Ansprüche 1 bis 4,
**dadurch gekennzeichnet, daß** der Reflektor (13) mit einem etwa senkrecht zur Anschlußfläche des Spiegelfußes (1) an das Fahrzeug verlaufenden geraden Wandabschnitt (18) an das freie Ende (10) des Lichtfensters (6) anschließt.

6. Außenrückblickspiegel nach Anspruch 5,
**dadurch gekennzeichnet, daß** der gerade Wandabschnitt (18) über einen im Querschnitt teilkreisförmig gekrümmten Abschnitt (17) des Reflektors (13) an die Zwischenwand (9) anschließt.

7. Außenrückblickspiegel nach einem der Ansprüche 1 bis 6,
**dadurch gekennzeichnet, daß** die beiden Brennpunkte (14, 15) des Reflektors (13) auf einer Geraden (G) liegen, die unter einem spitzen Winkel zu der parallel zur Fahrzeugachse verlaufenden Achse (X) liegt.

## Claims

1. An exterior rearview mirror for vehicles, in particular motor vehicles, having a mirror base (1) and a mirror head (2) which has a mirror glass holder (4) and a mirror housing (3) and in which there is housed at least one direction indicator lamp (11) lying behind a light window (6) and being arranged in the mirror head (2) such that it radiates light rearwards against the direction of travel (F) of the vehicle over an angle (α), directed away from the vehicle, of at least 55° relative to a straight line (X) which lies parallel to the vehicle axis and which is provided exterior to the outline of the mirror housing (3) and at the side remote from the mirror base, **characterised in that** the direction indicator lamp (11) is located at a first focal point (14) of an ellipsoidal reflector (13) at whose second focal point (15) there is intersection of the light rays reflected from the reflector (13), and **in that** the second focal point (15) lies exterior to the outline of the mirror housing (3).

2. An exterior rearview mirror according to Claim 1, **characterised in that** the reflector (13) is integral with a dividing wall (9) provided within a housing (3) of the mirror head (2).

3. An exterior rearview mirror according to Claim. 1 or 2, **characterised in that** the reflector (13) and the dividing wall (9) are separate component parts.

4. An exterior rearview mirror according to Claim 2 or 3, **characterised in that** the dividing wall (9) bounds an installation compartment (8) for at least one further direction indicator lamp which radiates light forwards in the direction of travel (F) of the vehicle.

5. An exterior rearview mirror according to any one of Claims 1 to 4, **characterised in that** the reflector (13) adjoins the free end (10) of the light window (6) by means of a straight wall portion (18) running substantially perpendicular to the connection surface of the mirror base (1) to the vehicle.

6. An exterior rearview mirror according to Claim 5, **characterised in that** the straight wall portion (18) adjoins the dividing wall (9) via a portion (17), of the reflector (13), with a cross-section curved in an arc.

7. An exterior rearview mirror according to any one of Claims 1 to 6, **characterised in that** the two focal points (14, 15) of the reflector (13) lie on a straight line (G) lying at an acute angle to the axis (X) running parallel to the vehicle axis.

## Revendications

1. Rétroviseur extérieur pour véhicule, en particulier pour véhicule automobile, comprenant un pied (1) et une tête (2) qui comporte un porte-miroir (4) et un boîtier (3) et dans lequel est logée au moins une lampe de clignotant (11) qui se trouve derrière une fenêtre à lumière (6) et qui est agencée dans la tête (2) de manière à émettre de la lumière en sens opposé à la direction de roulement (F) du véhicule vers l'arrière sous un angle (α) détourné du véhicule d'au moins 55° par rapport à une droite (X) située parallèlement à l'axe du véhicule et prévue à l'extérieur du contour du boîtier (3) et sur le côté détourné du pied, **caractérisé en ce que** la lampe de clignotant (11) est située dans un premier foyer (14) d'un réflecteur ellipsoïdal (13) comportant un deuxième foyer (15) dans lequel les rayons de lumière réfléchis par le réflecteur (13) se recoupent mutuellement, et **en ce que** le deuxième foyer (15) se trouve à l'extérieur du contour du boîtier (3).

2. Rétroviseur extérieur selon la revendication 1, **caractérisé en ce que** le réflecteur (13) est réalisé d'un seul tenant avec une paroi intermédiaire (9) qui est prévue à l'intérieur d'un boîtier (3) de la tête (2).

3. Rétroviseur extérieur selon l'une ou l'autre des revendications 1 et 2, **caractérisé en ce que** le réflecteur (13) et la paroi intermédiaire (9) sont des composants séparés l'un de l'autre.

4. Rétroviseur extérieur selon l'une ou l'autre des revendications 2 et 3, **caractérisé en ce que** la paroi intermédiaire (9) limite un espace de montage (8) pour au moins une autre lampe de clignotant qui émet de la lumière en direction de roulement (F) du véhicule vers l'avant.

5. Rétroviseur extérieur selon l'une des revendications 1 à 4, **caractérisé en ce que** le réflecteur (13) se raccorde par un tronçon de paroi rectiligne (18), s'étendant approximativement perpendiculairement à la surface de raccordement du pied (1) au véhicule, à l'extrémité libre (10) de la fenêtre à lumière (6).

6. Rétroviseur extérieur selon la revendication 5, **caractérisé en ce que** le tronçon de paroi rectiligne (18) se raccorde à la paroi intermédiaire (9) via un tronçon (17) du réflecteur (13), recourbé avec en coupe une forme de cercle partiel.

7. Rétroviseur extérieur selon l'une des revendications 1 à 6, **caractérisé en ce que** les deux foyers (14, 15) du réflecteur (13) se trouvent sur une droite (G) qui s'étend sous un angle aigu par rapport à l'axe (X) s'étendant parallèlement à l'axe du véhicule.
